# EUROPEAN PATENT SPECIFICATION

(11) **EP 2 391 045 B1**
(45) Date of publication and mention of the grant of the patent: **07.11.2012**
(21) Application number: 11167714.2
(22) Date of filing: 26.05.2011
(51) Int. Cl.: H04L 1/18, H04W 72/04

(54) **Radio base station and radio resource allocation method**
Funkbasisstation und Funkressourcenzuweisungsverfahren
Station de base radio et procédé d'allocation des ressources radio

(30) Priority: 28.05.2010 JP 2010123078
(43) Date of publication of application: 30.11.2011
(73) Proprietor: NTT DoCoMo, Inc., Tokyo 100-6150 (JP)
(72) Inventor: Shirakabe, Masashige, Tokyo, 100-6150 (JP); Kikuiri, Kei, Tokyo, 100-6150 (JP); Hanaki, Akihito, Tokyo, 100-6150 (JP); Ofuji, Yoshiaki, Tokyo, 100-6150 (JP)
(74) Representative: Schwabe - Sandmair - Marx

(56) References cited:
- EP-A1- 2 166 803
- WO-A1-2010/032124
- US-A1- 2004 196 801
- US-A1- 2010 128 687
- MOTOROLA: "Resource Scheduling for Voice Services", 3GPP DRAFT; R2-062969, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Seoul, Korea; 20061005, 5 October 2006 (2006-10-05), XP050132481, [retrieved on 2006-10-05]

## Description

### BACKGROUND OF THE INVENTION

### 1. Field of the Invention

The present invention relates to radio communication control techniques, and more particularly, to a radio base station and radio resource allocation method for allocating radio resources to radio communication terminals at predetermined intervals.

### 2. Description of the Related Art

In LTE (Long Term Evolution), OFDMA (Orthogonal Frequency Division Multiple Access) is used as a downlink modulation scheme, while SC-FDMA (Single-Carrier Frequency Division Multiple Access) is used as an uplink modulation scheme. Further, in LTE, high-speed packet transmissions are realized by using dynamic scheduling for dynamically allocating radio resources in the time domain and the frequency domain based on the instantaneous received signal quality for each sub-frame (for example, 3GPP TS36, 213).

Meanwhile, in dynamic scheduling it is necessary to transmit control information for each sub-frame for feedback of received signal quality, notification of radio resources and the like. Therefore, when dynamic scheduling is used in packet transmissions such as VoIP (Voice over IP) in which packet data of a small payload size periodically occurs, control overhead relatively increases, and transmission efficiency deteriorates. Thus, persistent scheduling has been proposed in which radio resources in the frequency domain are allocated persistently at certain time intervals (for example, 3GPP, R1-060099).

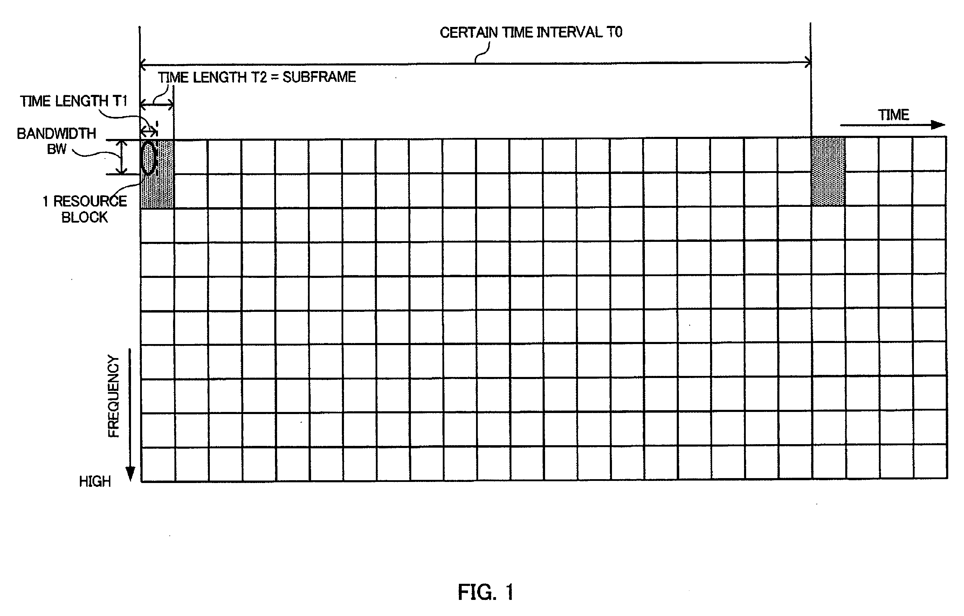

FIG. 1 is a diagram showing an example of radio resource allocation using persistent scheduling. As shown in FIG. 1, in persistent scheduling, a single or plurality of consecutive resource blocks in the frequency domain (two consecutive resource blocks in the frequency domain in FIG. 1) is allocated persistently to a radio communication terminal at certain time intervals T0. In persistent scheduling, it is not necessary to transmit the control information for each sub-frame unlike dynamic scheduling, and it is thereby possible to greatly reduce control overhead.

Herein, the resource block is a basic unit of allocation of radio resources in the frequency domain, and a single resource block has a bandwidth BW (12 subcarriers) of 180 kHz in the frequency domain and time length T1 of 0.5 ms in the time domain. Meanwhile, the sub-frame is a minimum unit of allocation of radio resources in the time domain, and a single sub-frame has a time length T2 of 1 ms two times that of a single resource block in the time domain. Scheduling is performed for each sub-frame in the time domain, and on a resource-block-by-resource-block basis in the frequency domain.

Then, as a method of improving the received signal quality of a radio communication terminal with poor received signal quality such that the terminal exists at a cell edge, Sub-Frame Bundling (SFB) is specified (for example, 3GPP, TS36.321). In Sub-Frame Bundling, since a single item of packet data that is normally transmitted in a sub-frame is dispersed over a plurality of consecutive sub-frames, it is possible to improve the received signal quality.

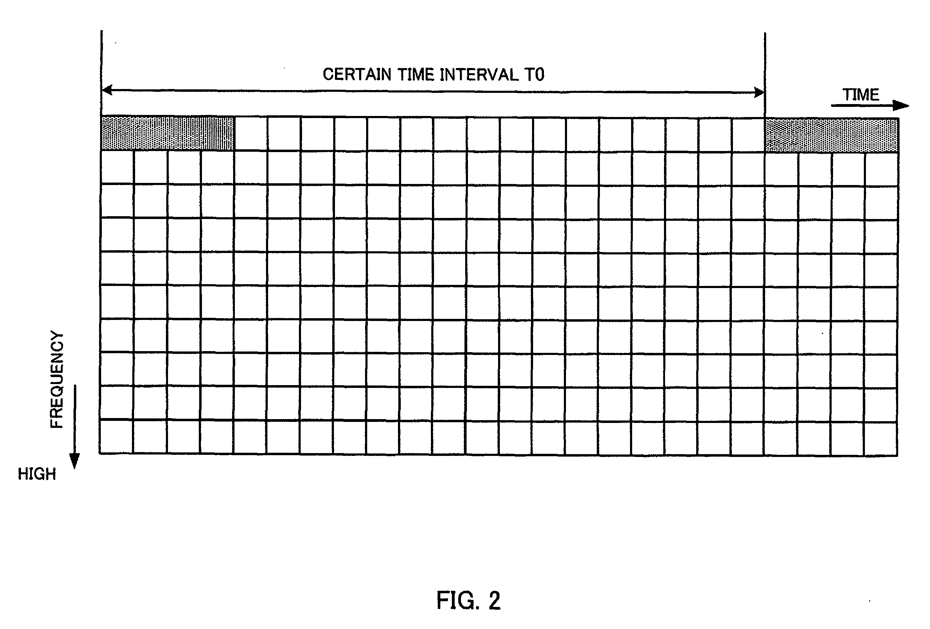

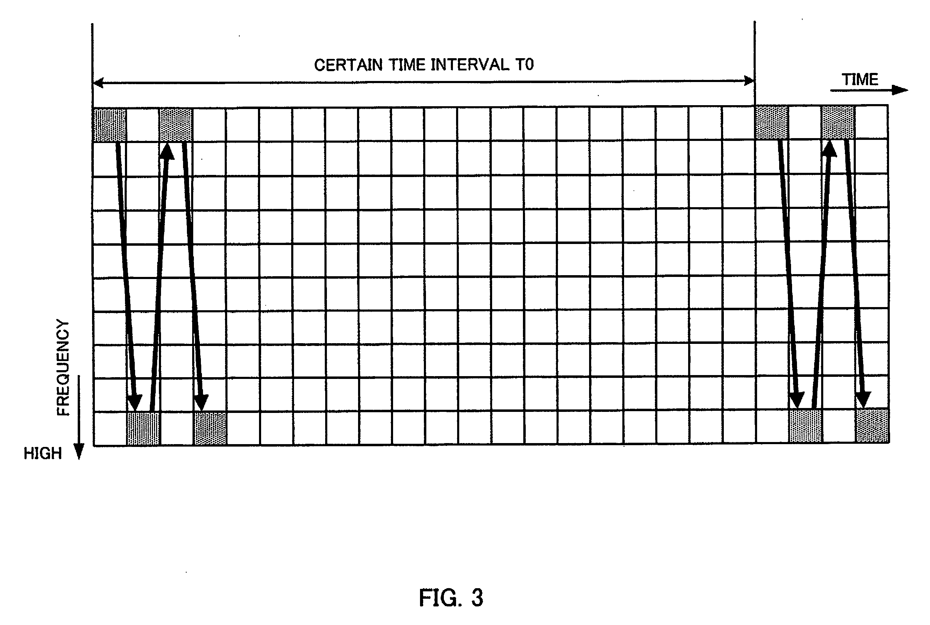

It has also been studied that the abode-mentioned persistent scheduling is performed on a radio communication terminal to which the aforementioned Sub-Frame Bundling is applied. FIG. 2 is a diagram showing an example of radio resource allocation using persistent scheduling for a radio communication terminal to which Sub-Frame Bundling is applied. As shown in FIG. 2 , a plurality of consecutive sub- frames in the time domain (four consecutive sub-frames in the time domain in FIG. 2) is allocated persistently to a radio communication terminal to which Sub-Frame Bundling is applied at certain time intervals T0. Further, as shown in FIG. 3, by performing frequency hopping among sub-frames, since frequency diversity gain is obtained, it is possible to improve the received signal quality.

In Sub-Frame Bundling, it is possible to allocate to a plurality of resource blocks in the frequency domain per sub-frame, and in transmission for each certain time interval, it is possible to perform allocation to resource blocks based on any hopping patterns.

Further, persistent scheduling is effective scheduling for the quality of conventional voice speech (for example, voice speech by AMR at an information rate of 12.2 kbps), and is considered also effective in high-quality VoIP using CODEC with higher information rates, TV telephone, bandwidth guaranteed radio transmission service used in relay of images, etc. To apply to these radio transmission services, it is required to transmit the data at information rates higher than the information rates in conventional voice speech.

To transmit at high information rates, it is possible to achieve such transmission by using the method of improving information rates using MCS (Modulation and Coding Scheme) with high rates, method of allocating more radio resources in the frequency domain to users, and the method of allocating more radio resources in the time domain to users. In uplink, from limitations of the transmission power of radio communication terminals, the method is effective of allocating more radio resources in the time domain to users in the vicinity of the cell edge.

Thus, it is studied that persistent scheduling is applied to real-time traffic such as VoIP. As in uplink in LTE, in the case of applying Synchronous HARQ (Hybrid Automatic Repeat request) in which transmission of a retransmission packet is performed at certain time intervals (specifically, an integral multiple of 8 ms), for example, by first applying persistent scheduling and Sub-Frame Bundling, and allocating more radio resources in the time domain, it is possible to achieve transmission of real-time traffic with high information rates.

However, when the information rate is increased by the aforementioned means, there is a possibility that a conflict occurs in transmission timing between a first transmission packet, and a retransmission packet of a radio packet index different from that of the first transmission packet. When a conflict occurs in transmission timing between the first transmission packet and the retransmission packet, it is not possible to concurrently transmit the first transmission packet and the retransmission packet to the same user, and the received signal quality deteriorates in the radio system.

Document EP 2 166 803 A1 discloses a method and a system for scheduling resources in a communication system. In this document, scheduling resources includes: determining, when there is a real time service to be transmitted, reserved processes for an uplink semi-persistent scheduling if it is judged that processes need to be reserved for the real time service; transmitting to a user equipment a notification message including information on the reserved processes; instructing the user equipment to transmit data packets on uplink Sub-Frames corresponding to the reserved processes.

### SUMMARY OF THE INVENTION

The present invention was made in view of such a respect, and it is an object of the invention to provide a radio base station and radio resource allocation method for enabling reductions of the conflict between transmission timing of a first transmission packet and transmission timing of a retransmission packet even when an allocation pattern of resource blocks persistently allocated at predetermined time intervals is consecutive in the time domain.

The present invention is defined by a radio base station according to claim 1 and a radio resource allocation method according to claim 10. Preferred embodiments are claimed in the dependent claims.

### BRIEF DESCRIPTION OF THE DRAWINGS

FIG. 1 is a diagram showing an example of conventional radio resource allocation;
FIG. 2 is a diagram showing an example of radio resource allocation using persistent scheduling for a radio communication terminal to which Sub-Frame Bundling is applied;
FIG. 3 is a diagram showing an example of radio resource allocation using Sub-Frame Bundling in which frequency hopping is performed;
FIG. 4 is a diagram illustrating an allocation method in applying persistent scheduling and Sub-Frame Bundling;
FIG. 5 is a diagram showing an example of high-quality CODEC applications;
FIG. 6 is a diagram showing another example of high-quality CODEC applications;
FIG. 7 is a diagram showing examples of conflicts in transmission timing in non-application of Sub-Frame Bundling;
FIG. 8 is a diagram showing an allocation method in application/non-application of Sub-Frame Bundling;
FIG. 9 is a configuration diagram of a radio communication system according to an Embodiment of the invention;
FIG. 10 is a diagram showing an example of a functional block diagram of a radio base station according to the Embodiment of the invention;
FIG. 11 is a diagram showing a first control example in the radio base station according to the Embodiment of the invention;
FIG. 12 is a diagram showing a second control example in the radio base station according to the Embodiment of the invention;
FIG. 13 is a diagram showing a third control example in the radio base station according to the Embodiment of the invention;
FIG. 14 is a diagram showing an example of the functional block diagram of the radio base station according to the Embodiment of the invention;
FIG. 15 is a diagram showing a fourth control example in the radio base station according to the Embodiment of the invention;
FIG. 16 is a diagram showing a fifth control example in the radio base station according to the Embodiment of the invention;
FIG. 17 is a diagram showing an example of the functional block diagram of the radio base station according to the Embodiment of the invention;
FIG. 18 is a diagram showing a sixth control example in the radio base station according to the Embodiment of the invention; and
FIG. 19 is a diagram showing a seventh control example in the radio base station according to the Embodiment of the invention.

### DETAILED DESCRIPTION OF THE INVENTION

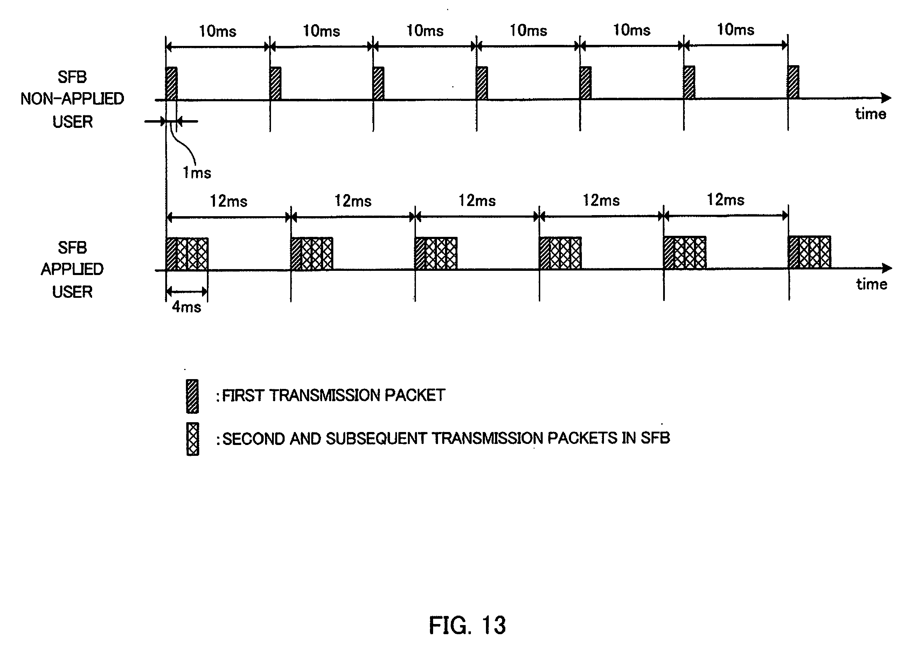

The following detailed description describes several embodiments showing different aspects of the present invention. The aspects related to the characterising portion of the independent claims correspond to the embodiment of figure 13.

Described first is a case where an allocation pattern of resource blocks persistently allocated at predetermined time intervals is consecutive in the time domain i.e. an allocation method in applying persistent scheduling and Sub-Frame Bundling (SFB).

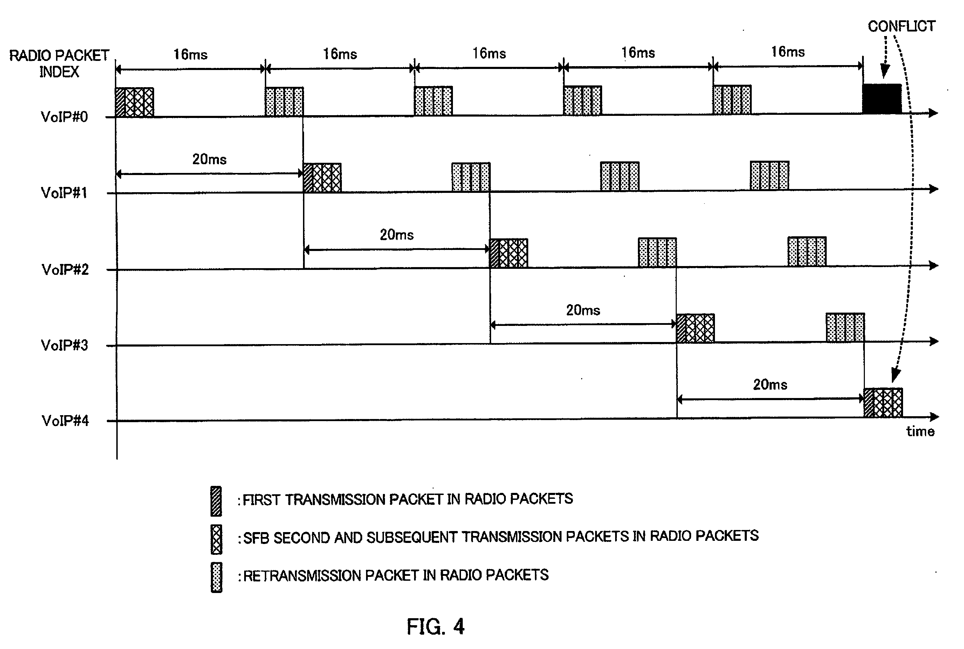

FIG. 4 shows the case to which is applied Synchronous HARQ (Hybrid Automatic Repeat request) in which radio packets (herein, using VoIP packets as an example) of Sub-Frame Bundling transmitted consecutively in four sub-frames are transmitted at intervals of 20 ms in the time domain, and transmission of retransmission packets is performed at timing at certain time intervals (for example, an integer multiple of 8 ms).

In the case of applying Sub-Frame Bundling and Synchronous HARQ, since error detection is performed after receiving up to the final sub-frame on the reception side (base station), some delay occurs in timing for transmitting ACK/NACK generally as compared with the case where Sub-Frame Bundling is not applied. Herein, an example is shown in which retransmission is performed at intervals of 16 ms by Synchronous HARQ due to the delay of ACK/NACK. In FIG. 4, it is possible to transmit first transmission packets and retransmission packets of the different radio packet indexes up to timing of the fifth (x4) transmission (the fourth retransmission-packet transmission) without any conflict, and at timing of the sixth transmission, another first transmission packet (VoIP #4) and the retransmission packet (VoIP #1) conflict with each other.

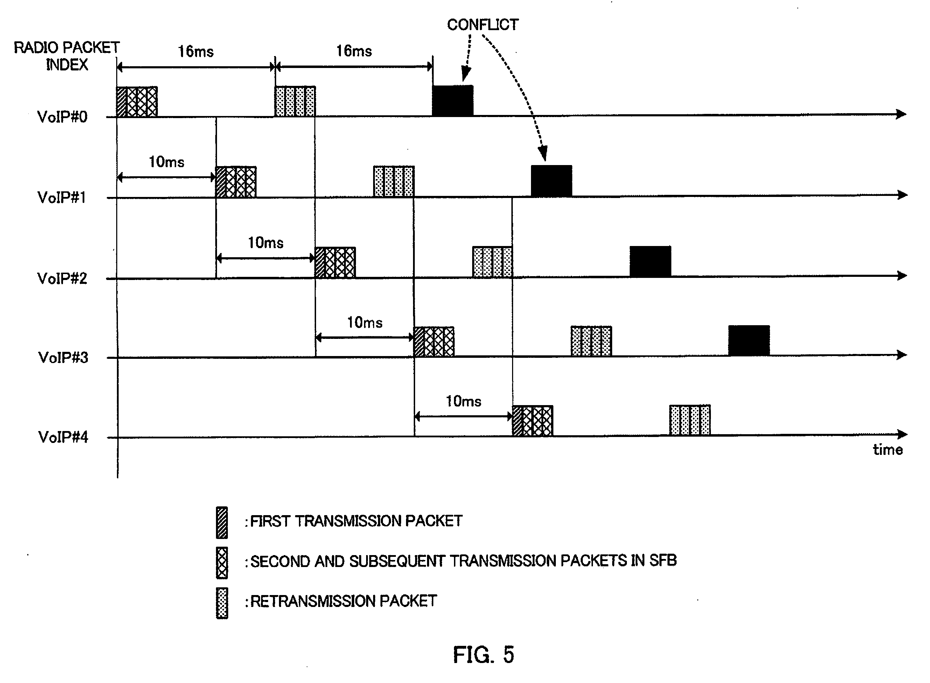

Meanwhile, as shown in FIG. 5, by transmitting radio packets (herein, using VoIP packets as an example) at intervals of 10 ms, in the case of using CODEC with a high information rate, a first transmission packet (VoIP #3) transmitted 30 ms later and a retransmission packet (VoIP #0) conflict with each other at timing of the third (x4) transmission (the second retransmission-packet transmission). In this case, the maximum number of transmission times of the retransmission packet decreases, and the received signal quality (for example, packet loss rate and throughput) deteriorates.

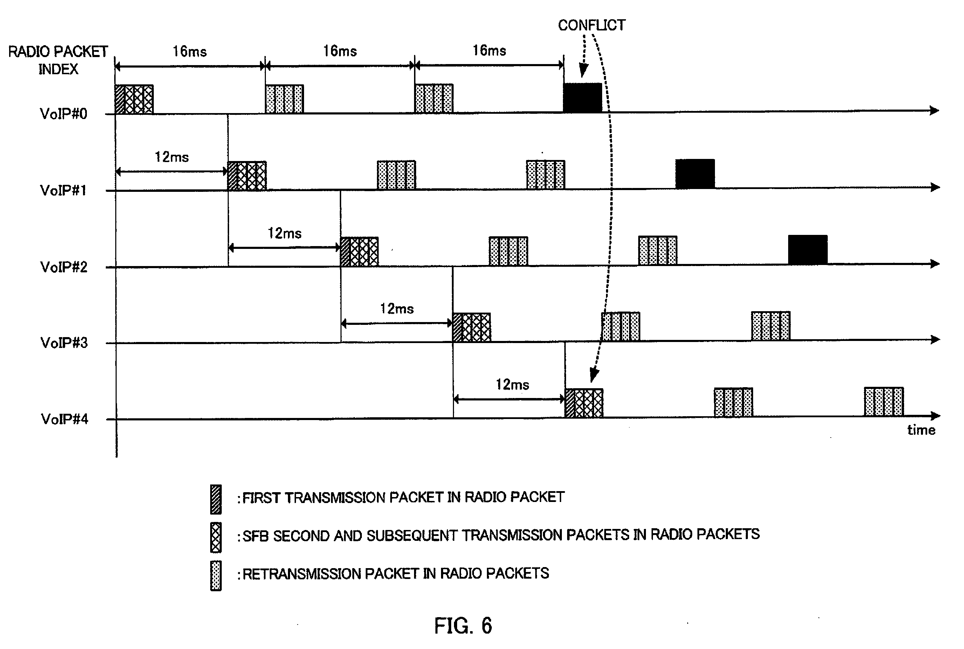

In the case of using Synchronous HARQ for transmitting retransmission packets at intervals of 16 ms, when Sub-Frame Bundling is applied, intervals of 12 ms are considered (see FIG. 6), as an example of transmission intervals of VoIP packets such that transmission timing of a retransmission packet does not conflict with transmission timing of a first transmission packet at timing of the third (x4) transmission (the second retransmission-packet transmission).

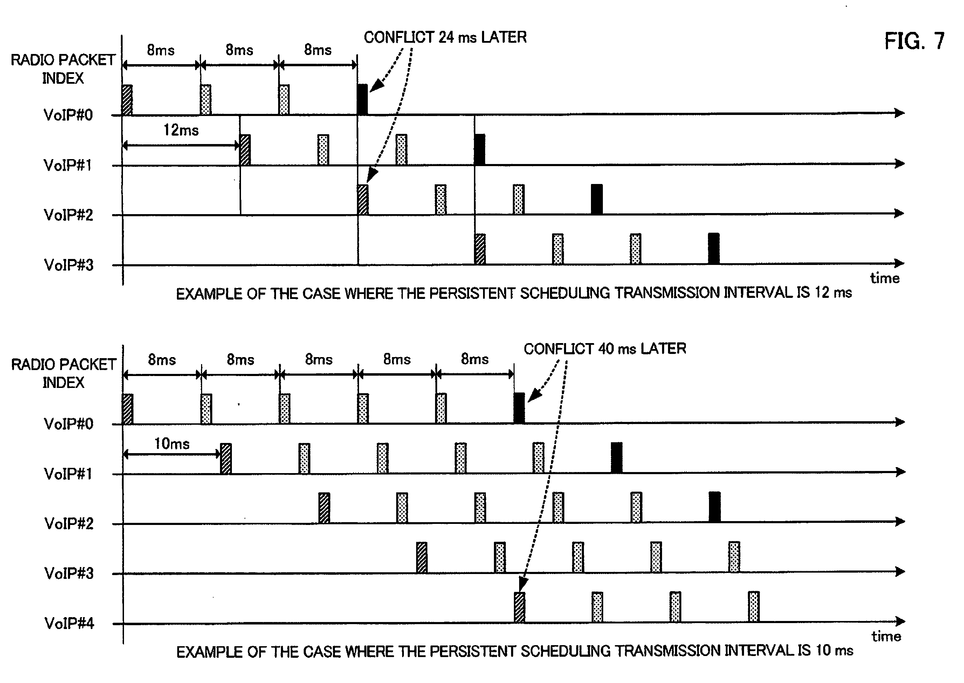

However, in the case of applying persistent scheduling for transmitting at intervals of 12 ms, the deterioration is reduced in characteristics of a user to which Sub-Frame Bundling is applied by using CODEC with a high information rate. However, when radio packets are transmitted to another user to which Sub-Frame Bundling is not applied also at intervals of 12 ms, transmission timing of the retransmission packet and transmission timing of the first transmission packet conflict with each other at timing of the fourth transmission (the third retransmission), and the received signal quality deteriorates as compared with the case of transmitting at intervals of 10 ms (see FIG. 7).

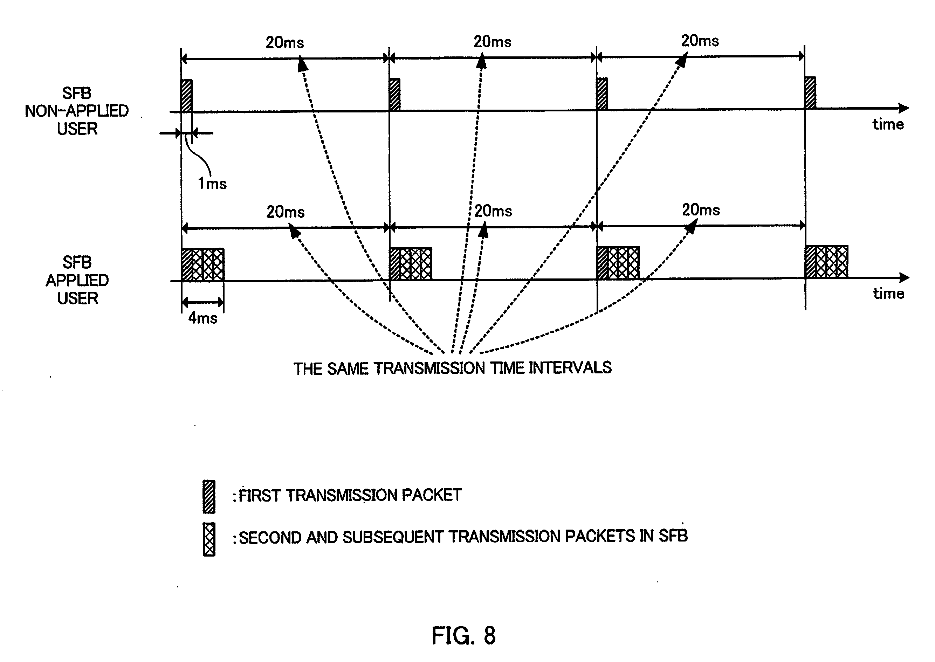

Therefore, in the case of applying persistent scheduling and Sub-Frame Bundling, the inventor of the invention found out that there is a possibility that a conflict occurs frequently between transmission timing of the first transmission packet and transmission timing of the retransmission packet when first transmission radio packets are transmitted using transmission intervals of persistent scheduling persistently as in the conventional scheme. Further, in the case of applying persistent scheduling and Sub-Frame Bundling, the inventor of the invention found out that there is a possibility that a conflict occurs frequently between transmission timing of the first transmission packet and transmission timing of the retransmission packet when the same transmission intervals of first transmission packets are set on a user to which Sub-Frame Bundling is applied and another user to which Sub-Frame bundling is not applied (see FIG. 8).

Then, the inventor of the invention obtained the idea of controlling transmission timing of first transmission packets and transmission timing of retransmission packets in the same user and/or different users, and thereby enabling a conflict in transmission timing between the first transmission packet and the retransmission packet to be suppressed even when an allocation pattern of resource blocks allocated persistently at predetermined intervals is consecutive in the time domain, and arrived at the invention.

An Embodiment of the invention will specifically be described below. In addition, in the following description of drawings, the same or similar parts are assigned the same or similar reference numerals.

### <Entire schematic configuration of the radio communication system>

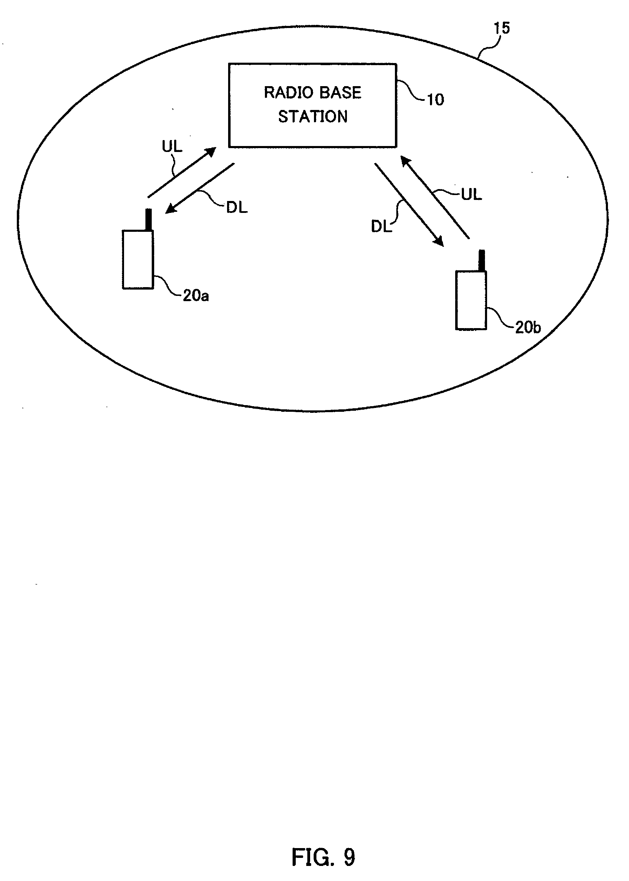

FIG. 9 is a configuration diagram of the radio communication system according to this Embodiment. As shown in FIG. 9, the radio communication system is comprised of a radio base station 10, and a plurality of radio communication terminals (herein, radio communication terminals 20a and 20b) that perform communications with the radio base station 10 inside a cell 15 formed by the radio base station 10.

The radio base station 10 allocates resource blocks (radio resources) in the frequency domain and the time domain persistently (or semi-persistently) to the radio communication terminals 20a, 20b at predetermined time intervals, using a scheduling method (for example, persistent scheduling) for performing resource allocation at predetermined time intervals. The radio base station 10 is capable of transmitting and receiving packet data such as VoIP data occurring periodically to/from the radio communication terminals 20a, 20b, using resource blocks assigned in each of uplink and downlink.

Further, the radio base station 10 is capable of making allocation patterns of resource blocks in the time domain and the frequency domain different patterns for each radio communication terminal in allocating resource blocks to a plurality of radio communication terminals at predetermined time intervals. For example, the radio base station 10 is capable of allocating two consecutive resource blocks in the frequency domain and a single sub-frame in the time domain to some user (for example, radio communication terminal 20a) at predetermined time intervals, while allocating a single resource block in the frequency domain and four consecutive sub-frames in the time domain to another user (for example, radio communication terminal 20b) at predetermined time intervals.

In addition, in FIG. 9, for convenience in description, only two radio communication terminals, 20a and 20b, are shown, but the radio base station is capable of communicating with three or more radio communication terminals. Further, the radio base station 10 is capable of communicating with a plurality of radio communication terminals using dynamic scheduling.

### <First configuration of the radio base station>

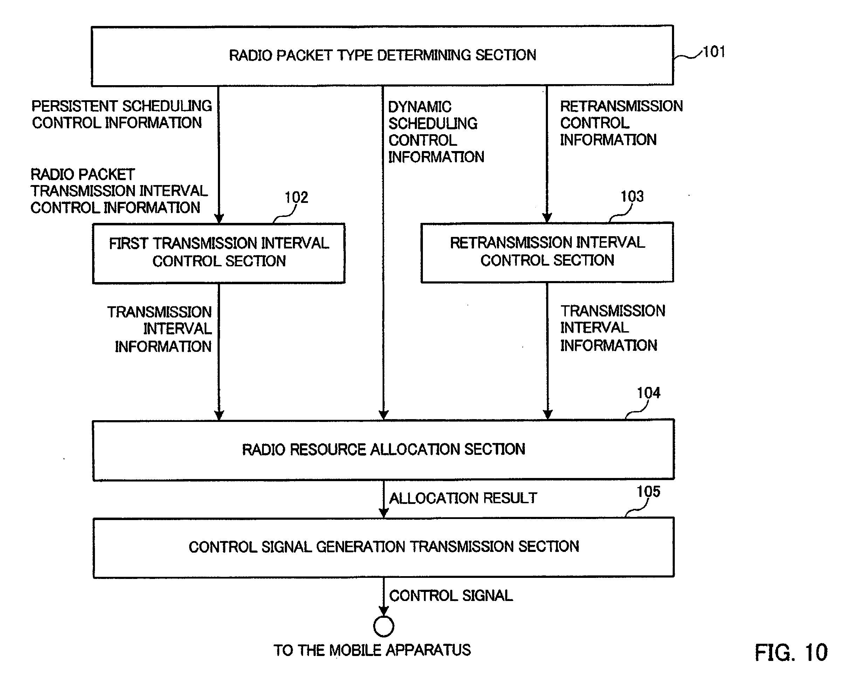

The radio base station 10 according to this Embodiment will specifically be described below with reference to FIG. 10. The radio base station 10 is physically an apparatus provided with an antenna, modem, CPU, memory, etc.

As shown in FIG. 10, the radio base station 10 has a radio packet type determining section 101, first transmission interval control section 102, retransmission interval control section 103, and radio resource allocation section 104. Further, when the radio base station 10 performs uplink control, the station 10 is capable of having a configuration including a control signal generation transmission section 105.

The radio packet type determining section 101 has the function of determining the type of a radio packet to transmit to a radio communication terminal. As candidates for the radio packet to transmit, there are a first transmission packet that is transmitted to the user as the data transmitted for the first time, and a retransmission packet that is transmitted again at timing predetermined time later when transmission of the first transmission packet is lost.

The first transmission packet includes a first transmission packet to which is applied scheduling (persistent scheduling) for allocating radio packets persistently at predetermined intervals, and a first transmission packet to which is applied dynamic scheduling. It is only essential that the radio packet type determining section 10 has the function of determining at least whether the packet is a first transmission packet that is allocated persistently at predetermined time intervals, or a retransmission packet among radio packets transmitted to the radio communication terminal. And FIG. 10 shows the case where the section 101 determines whether the packet is a retransmission packet, a first transmission packet to which is applied persistent scheduling, or a first transmission packet to which is applied dynamic scheduling.

When the radio packet determined in the radio packet type determining section 101 is a first transmission packet of a user to which is appliedpersistent scheduling, the section 101 outputs radio packet transmission interval control information that is information concerning the transmission interval of persistent scheduling, and persistent scheduling control information (for example, information concerning transmission timing in each user, information concerning transmission RB index and the number of transmission RBs in each user, etc.) required to control persistent scheduling to the first transmission interval control section 102.

When the transmission packet determined in the radio packet type determining section 101 is a first transmission packet in dynamic scheduling, the radio packet type determining section 101 outputs dynamic scheduling control information (for example, received signal quality information such as SINR, instantaneous throughput information, average throughput information, transmittable data amount, etc.) that is control information required in performing dynamic scheduling applied to the base station apparatus 10 to the radio resource allocation section 104.

When the transmission packet determined in the radio packet type determining section 101 is a retransmission packet, the radio packet type determining section 101 outputs retransmission control information (for example, information concerning transmission timing and transmission RB in last allocation, information concerning the modulation scheme and coding rate in last allocation, etc.) that is parameters required to perform retransmission control in applying Synchronous HARQ to the retransmission interval control section 103.

The first transmission interval control section 102 controls the transmission interval of each first transmission packet so as to decrease the number of conflicts between transmission timing of a first transmission packet and transmission timing of a retransmission packet of the radio packet index different from that of the first transmission packet i.e. so as to disperse the first transmission packet and the retransmission packet in transmission allocation of first transmission packets allocated persistently at predetermined time intervals, and outputs the transmission interval to the radio resource allocation section 104 as transmission interval information.

Further, the first transmission interval control section 102 is capable of controlling the transmission interval of each first transmission packet in the same user and/or different users, using at least one of the received signal quality of the radio communication terminal, and the data rate and the radio packet index of the radio packet to transmit. In addition, these kinds of information are included in the radio packet transmission interval control information received from the radio packet type determining section 101.

The retransmission interval control section 103 determines the transmission interval of the retransmission packet corresponding to the first transmission packet to output to the radio resource allocation section 104 as the transmission interval information.

The transmission interval information output from the first transmission interval control section 102 and the retransmission interval control section 103 is input to the radio resource allocation section 104. Further, the radio resource allocation section 104 receives the persistent scheduling control information, dynamic scheduling control information, and retransmission control information output from the radio packet type determining section 101.

The radio resource allocation section 104 determines radio resource allocation using the transmission interval information output from the first transmission interval control section 102 and the retransmission interval control section 103. Further, the radio resource allocation section 104 outputs the radio resource allocation result. In uplink, since it is necessary to notify the radio communication terminal of uplink allocation information (in semi-persistent scheduling, only the first transmission packet), the control signal generation transmission section 105 in the radio base station generates a control signal to notify the radio communication terminal. In downlink, allocation is performed on the radio base station based on the radio resource allocation result without notifying the radio communication terminal. Herein, the control signal is capable of including an index of a resource block to assign a radio packet that is the first packet in starting allocation of persistent scheduling in each user.

Described next is an example of radio resource allocation method in the radio base station configured as shown in FIG. 10 described above. In addition, in the following description, an example is shown where four consecutive sub-frames are allocated to a user to which Sub-Frame Bundling is applied. However, the invention is not limited thereto, and it is possible to use any number of consecutive sub-frames to allocate. Further, with respect to the retransmission packet in this Embodiment, assuming the application of Synchronous HARQ in which transmission of the retransmission packet is performed at timing at certain time intervals, the example is shown where retransmission is performed at intervals of 8 ms in user to which Sub-Frame Bundling is not applied, while retransmission is performed at intervals of 16 ms in user to which Sub-Frame Bundling is applied. But it is possible to make the transmission interval of the retransmission packet any transmission interval. Further, in this Embodiment, in the case of representing the number of transmission times as "n" in the user to which Sub-Frame Bundling is applied, it is meant that transmission is performed in total 4 x n sub-frames in consideration of the number of sub-frames consecutively transmitted in Sub-Frame Bundling.

### <First control example in the radio base station>

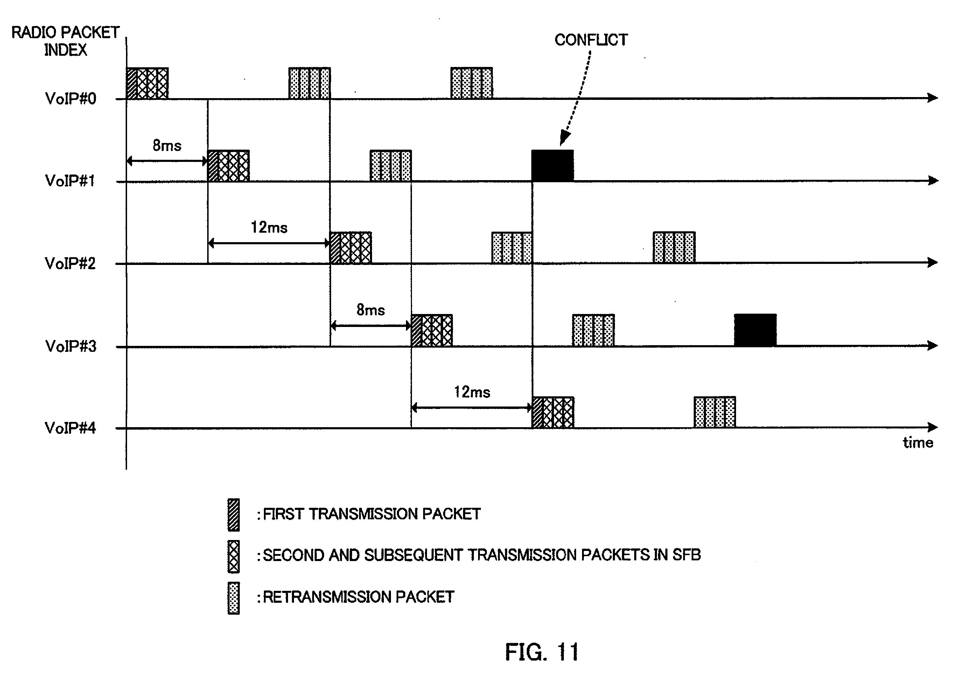

FIG. 11 shows an example (first control example) of the radio resource control in the radio base station 10. In the first control example as shown in FIG. 11, in allocation of radio packets, using the radio packet index indicating the transmission sequence of radio packets, it is set that transmission allocation intervals of first transmission packets alternately differ from one another. Herein, shown is the case where the transmission intervals of first transmission packets are set so that the interval is 8 ms when the radio packet index is an even number, while being 12 ms when the radio packet index is an odd number (twice during 20 ms).

In above-mentioned FIG. 5 in which radio packets are allocated every 10 ms, in any radio packets, transmission timing (32 to 36 ms later after the first transmission) of the retransmission packet in the third transmission (second retransmission) conflicts with the first transmission packet (30 ms to 34 ms later) of another radio packet index.

Meanwhile, by setting as shown in FIG. 11, when the radio packet index is an odd number, as in the scheme shown in FIG. 5, a conflict occurs with the first transmission packet of another radio packet index that is transmitted 30 ms later at timing of the third transmission (second retransmission). However, when the radio transmission number is an even number (including "0"), it is possible to perform transmission without any conflict with the first transmission packet even at timing of the third transmission (second retransmission), and as compared with the scheme as shown in FIG. 5, it is possible to increase the number of transmission times.

Thus, in allocation of radio packets, by setting so that the transmission allocation intervals of first transmission packets alternately differ from one another in the radio packet index, as compared with the scheme for setting the transmission allocation intervals of first transmission packets at a certain value, it is possible to increase the number of averagely transmittable times, and to improve the received signal quality.

FIG. 11 as described above shows the case of the setting such that the transmission allocation intervals of first transmission packets alternately differ from one another, but as a matter of course, the invention is not limited to the case where the intervals alternately differ from one another in multiples of "2" i.e. even and odd radio packet indexes, and the transmission allocation intervals of first transmission packets may be set to differ from one another in multiples of "3" or more.

### <Second control example in the radio base station>

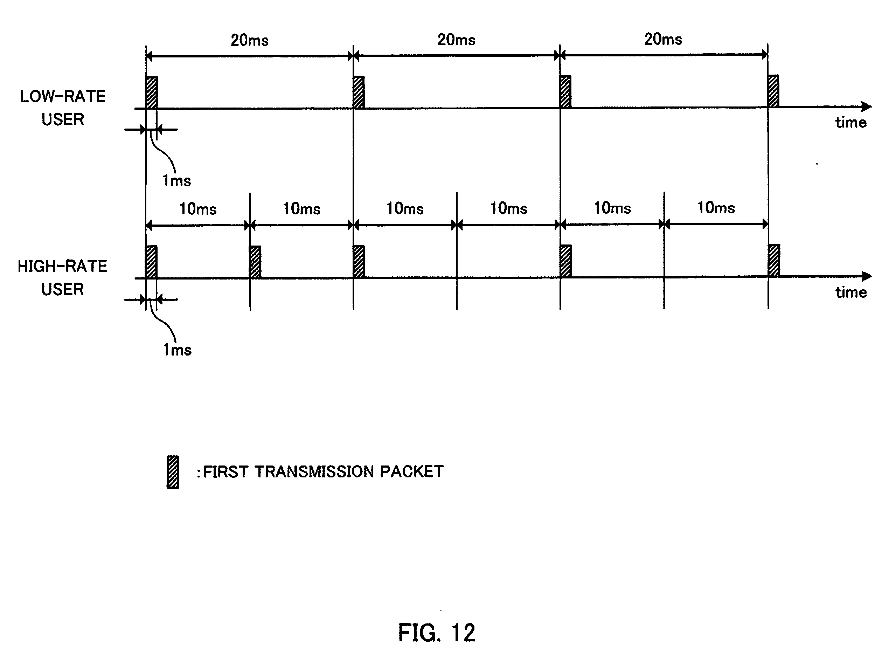

FIG. 12 shows a control example (second control example) different from the first control example as described above. In the second control example, radio packet transmission interval control is performed between users (radio communication terminals) corresponding to data rates of radio packets.

FIG. 12 shows the case of performing radio packet transmission interval control corresponding to data rates of radio packets, and thereby transmitting first transmission packets at intervals of 10 ms to a user (radio communication terminal) of a high information rate, while transmitting first transmission packets at intervals of 20 ms to a user of a low information rate (for example, 1/2 rate). By this means, it is possible to achieve equal received signal quality between users of different information rates. Herein, the information rate is capable of including the codec rate in VoIP, and transmission packet size determined by MCS.

Further, the above-mentioned first control example may be applied for each of users of different information rates. For example, with respect to the user of the high information rate such that transmission of first transmission packets is performed at intervals of 10 ms (twice during 20 ms), as shown in FIG. 11 as described above, it is possible to set transmission intervals of first transmission packets so that the interval is 8 ms when the radio packet index is an even number, while being 12 ms when the radio packet index is an odd number (twice during 20 ms). Further, with respect to the user of the low information rate such that transmission of first transmission packets is performed at intervals of 20 ms, for example, as shown in FIG. 4 as described above, it is possible to set the transmission allocation intervals of first transmission packets at a certain value. Thus, by setting the transmission intervals of first transmission packets for each user, in each user, it is possible to reduce conflicts between the first transmission packet and the retransmission packet, and to improve the received signal quality.

### <Third control example in the radio base station>

FIG. 13 shows a third control example. In the third control example as shown in FIG. 13, in allocation of radio packets, the transmission allocation interval of first transmission packets is set to be different between the user to which Sub-Frame Bundling is applied and the user to which Sub-Frame Bundling is not applied.

In FIG. 13, with respect to the user to which Sub-Frame Bundling is applied, first transmission packets are transmitted at intervals of 12 ms, and with respect to the user to which Sub-Frame Bundling is not applied, first transmission packets are transmitted at intervals of 10 ms. Herein, in the user to which Sub-Frame Bundling is applied, the transmission timing does not conflict with the first transmission packet up to the third transmission (the second retransmission) (see FIG. 6), and in the user to which Sub-Frame Bundling is not applied, it is possible to avoid the conflict between the first transmission packet and the transmission timing up to the fifth transmission (the fourth retransmission (see FIG. 7)). It is thereby possible to improve the received signal quality of radio packets.

It is possible to make the determination whether Sub- Frame Bundling is applied or not applied, for example, by using the received signal quality such as SINR and propagation path loss.

As shown in FIG. 8 described above, for each of the user to which persistent scheduling is applied and the user to which persistent scheduling is not applied, when first transmission packets are transmitted at certain transmission intervals (for example, intervals of 20 ms), it is difficult to reduce conflicts between the first transmission packet and the retransmission packet and to improve the received signal quality in both of the users. Further, when the same transmission interval of first transmission packets is set on the user to which Sub-Frame Bundling is applied and the user to which Sub-Frame Bundling is not applied, there is the problem that the conflict frequently occurs in transmission timing between the first transmission packet and the retransmission packet.

Meanwhile, as shown in FIG. 13, by setting different transmission allocation intervals of first transmission packets on the user to which Sub-Frame Bundling is applied and the user to which Sub-Frame Bundling is not applied, it is possible to reduce conflicts between the first transmission packet and the retransmission packet and to improve the received signal quality in both of the users.

In addition, the above-mentioned first control example may be applied for each user. For example, using the received signal quality, with respect to the user to which Sub-Frame Bundling is applied, in the case where first transmission packets are transmitted at intervals 10 ms (twice during 20 ms), as shown in FIG. 11 described above, it is possible to set the transmission intervals of the first transmission packets so that the interval is 8 ms when the radio packet index is an even number, while being 12 ms when the radio packet index is an odd number (twice during 20 ms).

### <Second configuration of the radio base station>

Described next is a radio base station having a configuration different from that of the radio base station 10 as shown in FIG. 10 described above.

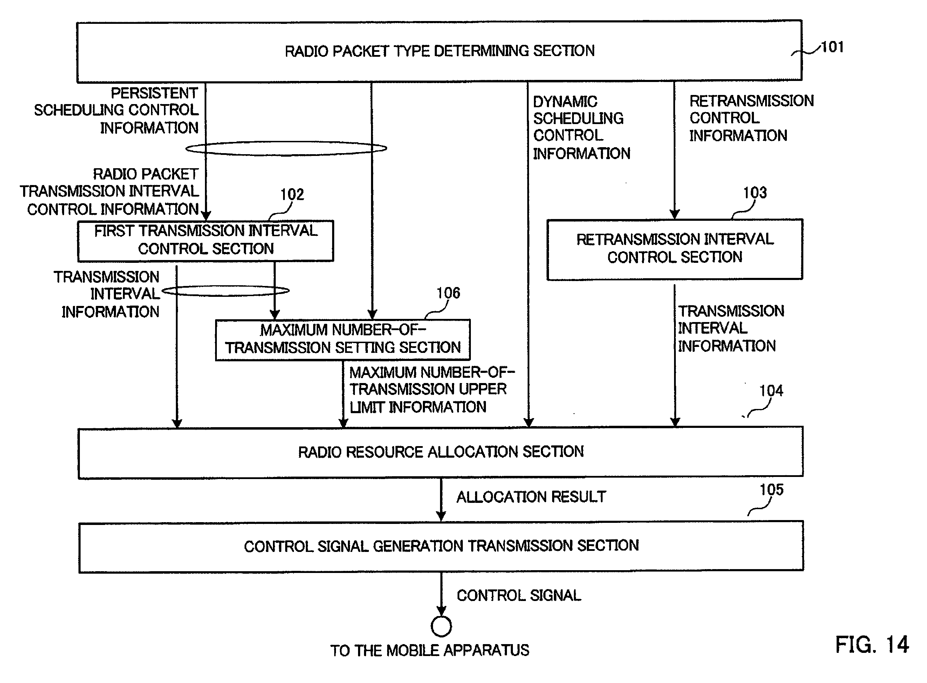

A radio base station apparatus as shown in FIG. 14 is different from the radio base station apparatus as shown in FIG. 10 in the respect that a maximum number-of-transmission setting section 106 is added. To the maximum number-of-transmission setting section 106 is input the transmission interval information output from the first transmission interval control section 102, and the radio packet transmission interval control information and persistent scheduling control information output from the radio packet type determining section 101.

The maximum number-of-transmission setting section 106 outputs the maximum number-of-transmission upper limit information using the input information. The maximum number-of-transmission upper limit information is the maximum number of transmission times of each retransmission packet enabling the transmission without the conflict in transmission timing between the first transmission packet and the retransmission packet of another first transmission packet of the different radio packet index. Further, the output maximum number-of-transmission upper limit information is input to the radio resource allocation section 104. The radio resource allocation section 104 is capable of determining radio resource allocation according to the maximum number-of-transmission upper limit information.

### <Fourth control example in the radio base station>

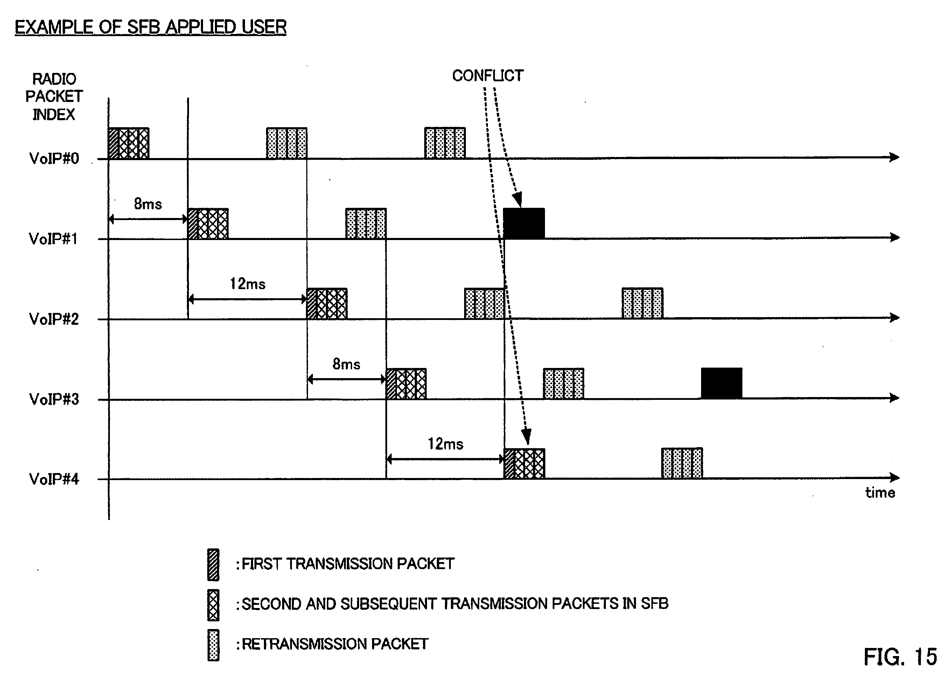

In FIG. 15, described is a control example (fourth control example) in the radio base station configured as shown in FIG. 14 described above.

In the fourth control example as shown in FIG. 15, in allocation of radio packets, when the first transmission packet (VoIP#4) conflicts with transmission timing of the retransmission packet (VoIP #1) of another first transmission packet of the different radio packet index, the radio resource allocation section 104 preferentially allocates the first transmission packet (VoIP #4). FIG. 15 shows the case where the transmission allocation intervals of first transmission packets are set alternately at 8 ms and 12 ms in allocation of radio packets, but the invention is not limited thereto.

In FIG. 5 described above, radio packets are allocated every 10ms, and in any VoIP packets, the first transmission packet (30 to 34 ms later) conflicts at timing (32 to 36 ms later after the first transmission) of the third transmission (the second transmission). Meanwhile, in the first control example as shown in FIG. 11 described above, when the radio packet indexes indicating the transmission sequence of radio packets are even numbers (including "0"), it is possible to perform transmission without the conflict with the first transmission packet even at timing of the third transmission (the second retransmission), and as compared with the conventional scheme as shown in FIG. 5, it is possible to increase the number of transmission times. Further, when the radio packet indexes are odd numbers, as in the conventional scheme as shown in FIG. 5, the conflicts occurs with the first transmission packet that is transmitted 30 ms at timing of the third transmission (the second retransmission).

Accordingly, as shown in FIG. 15, by limiting the number of transmission times of the retransmission packet (VoIP #1), the conflict is avoided between the first transmission packet (VoIP #4) and the retransmission packet, and it is possible to certainly transmit first transmission packets.

In addition, by determining the transmission interval of first transmission packets and the transmission interval of retransmission packets, the number of transmission times up to the conflict between the first transmission packet and the retransmission packet in the user is determined uniquely, and by the radio resource allocation section 104 limiting the number of transmission times of the retransmission packet, it is possible to avoid the conflict with the first transmission packet.

As shown in FIG. 14 described above, by providing the maximum number-of-transmission setting section 106, it is possible to control the maximum number of transmission times of each retransmission packet so that the transmission timing does not conflict between the first transmission packet and the retransmission packet of another first transmission packet. In addition, in this Embodiment, the maximum number of transmission times enabling the transmission without any conflict is designated as the maximum number-of-transmission upper limit.

### <Fifth control example in the radio base station>

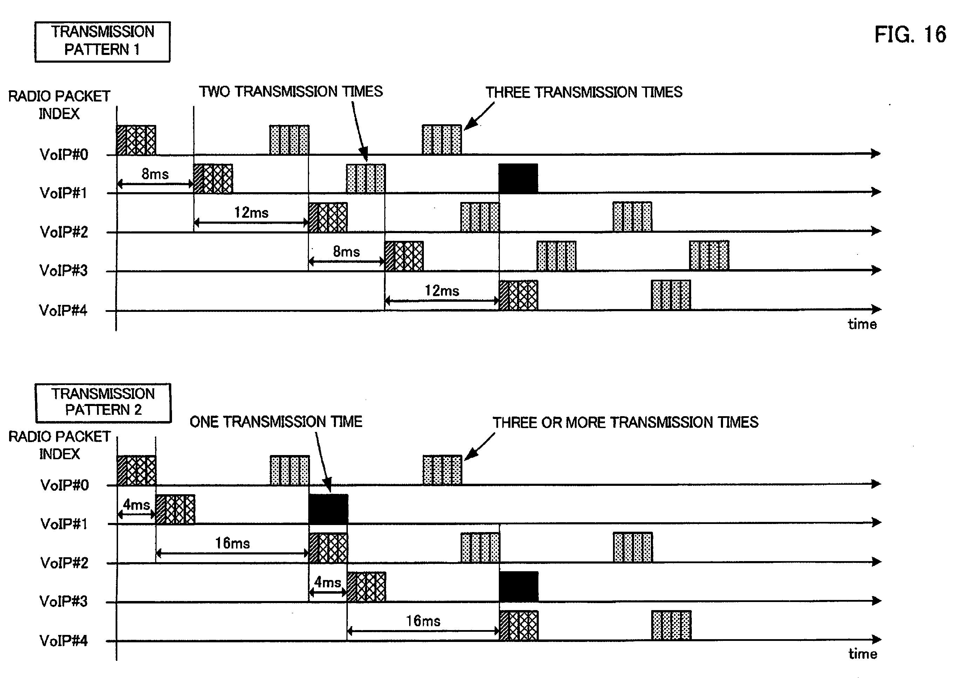

FIG. 16 shows a control example (fifth control example) different from the above-mentioned control examples. In the fifth control example as shown in FIG. 16, in allocation of radio packets, the transmission interval of each first transmission packet is controlled so as to increase the minimum value of the maximum number-of-transmission upper limit of the retransmission packet, and the number of transmission times of the retransmission packet is set.

For example, when radio packets to which is applied Sub-Frame Bundling are transmitted twice at intervals of 20 ms (transmitted over total 8 sub-frames within 20 sub-frames), as shown in FIG. 16, considered are the transmission method (transmission pattern 1) of repeating alternately the interval of 8 ms and the interval of 12 ms, and the transmission method (transmission pattern 2) of repeating alternately the interval of 4 ms and the interval of 16 ms. In addition, the maximum number of transmission times of each radio packet is assumed to be determined by the method shown in the fourth control example described above.

Herein, in the case of considering the real-time application such as VoIP, since it is required to control the error rate to within a certain value within the permissible delay time, it is possible to improve characteristics by setting the number of transmission times so as to increase the minimum value of the maximum number of transmission times of the retransmission packet. In FIG. 16, the maximum numbers of transmission times are respectively "2" and "3" in transmission pattern 1, and in contrast thereto, packets exist such that the maximum number of transmission times is "1" in transmission pattern 2.

Therefore, in contrast to transmission pattern 2 where the maximum number of transmission times is "1", since it is possible to set the maximum number of transmission times at "2" or more in transmission pattern 1, it is preferable to select transmission pattern 1. At this point, the transmission pattern is selected by the radio resource allocation section 104 to which are input combinations of a plurality of pieces of transmission interval information and maximum number-of-transmission upper limit information.

Thus, it is possible to improve characteristics by controlling the transmission interval of each first transmission packet so as to increase the minimum number of the maximum number-of-transmission upper limit of the retransmission packet in allocation of radio packets.

### <Third configuration of the radio base station>

Described next is a radio base station having a configuration different from those of the radio base stations 10 as shown in FIGs. 10 and 14 described above.

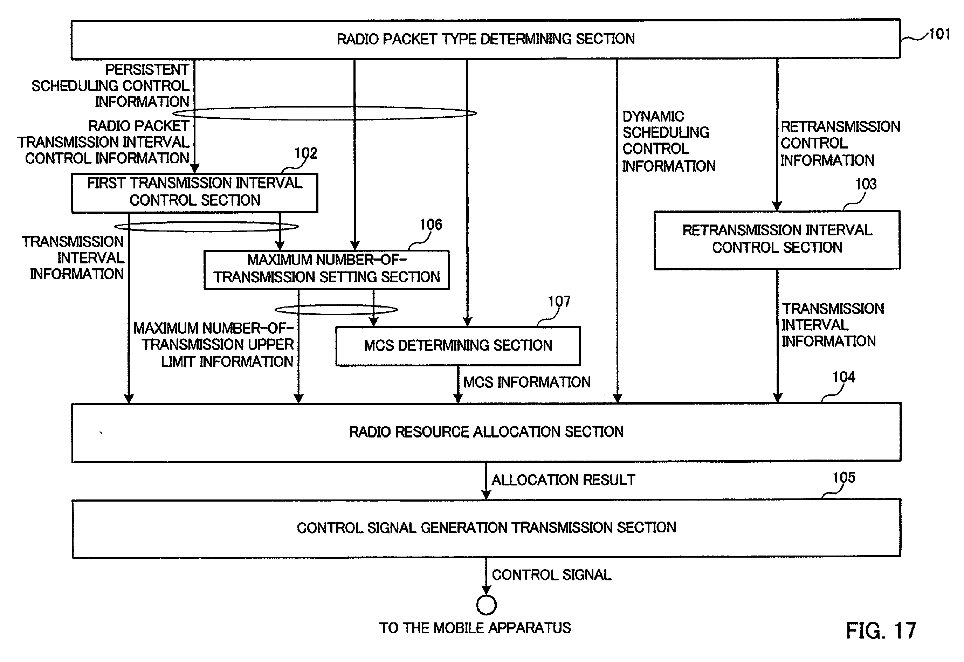

A radio base station apparatus as shown in FIG. 17 is different from the radio base station apparatus as shown in FIG. 14 in the respect that an MCS determining section 107 is added. The MCS determining section 107 receives the persistent scheduling information output from the radio packet type determining section 101 and the maximum number-of-transmission upper limit information output from the maximum number-of-transmission setting section 106, and determines a modulation scheme and coding rate using the input information. As a specific example, since the received signal quality is determined by the maximum number of transmission times, it is possible to control so that the packet loss rate is uniform corresponding to the maximum number of transmission times among the users.

Further, it is also possible to select MCS corresponding to the number of resource blocks allocated per sub-frame, using the persistent scheduling control information. Herein, when VoIP traffic is assumed, generally, in speech, a state transition occurs between two states of the voiced segment and unvoiced segment. Therefore, to consider variations in the received signal quality, it is possible to dynamically control the MCS selection criterion and speech rate (speech CODEC) for each voiced segment. Also in the case of dynamically controlling the MCS selection criterion and speech rate, it is possible to apply this Embodiment with ease.

### <Sixth control example in the radio base station>

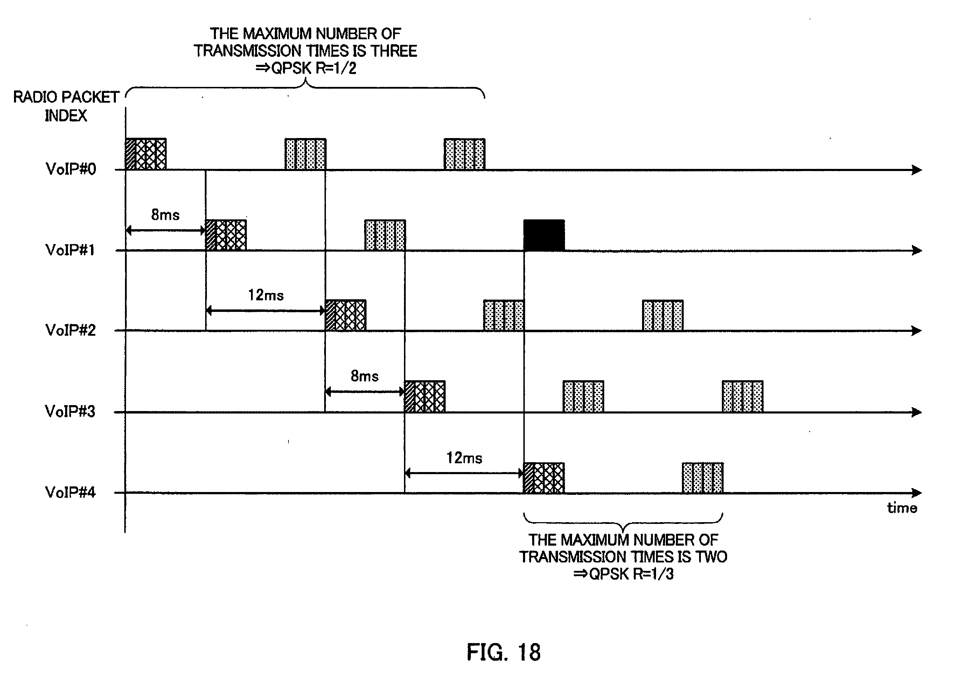

In FIG. 18, described is a control example (sixth control example) in the radio base station configured as shown in FIG. 17 described above.

In the sixth control example as shown in FIG. 18, in allocation of radio packets, based on the maximum number of transmission times of each retransmission packet determined in the maximum number-of-transmission setting section 106, the modulation scheme and coding rate of each retransmission packet are controlled so as to decrease a difference in the received signal quality between retransmission packets with the different maximum numbers of transmission times.

FIG. 18 shows the example in the case where the transmission allocation intervals of first transmission packets are alternately set at 8 ms and 12 ms in allocation of radio packets. At this point, when the radio packet indexes in FIG. 18 are even numbers, it is possible to perform transmission three times, while when the radio packet indexes are odd numbers, it is possible to perform transmission up to the second time, and the received signal quality differs in the case of using the same MCS. Therefore, in this Embodiment, MCS is determined so that the received signal quality is almost the same at any transmission timing.

As a specific example, in radio packets of the even numbers, transmission is performed using QPSK and R=1/2, and in radio packets of the odd numbers, transmission is performed using QPSK and R=1/3. Thus, it is possible to achieve equalization of the received signal quality by controlling the modulation scheme and coding rate based on the maximum number of transmission times of each retransmission packet.

### <Seventh control example in the radio base station>

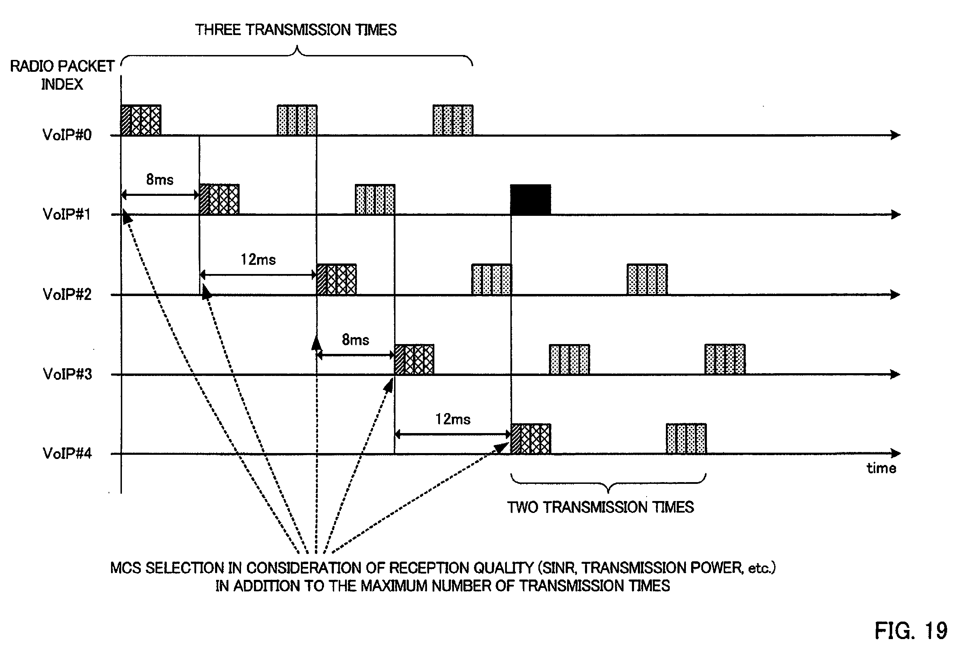

FIG. 19 shows a control example (seventh control example) different from the aforementioned control example . The sixth control example in FIG. 18 described above uses the maximum number-of-retransmission determining method in consideration of only the maximum number of retransmission times. In contrast thereto, the seventh control example as shown in FIG. 19 uses the maximum number-of-retransmissian determining method also in consideration of the received signal quality (such as, for example, reception power and reception SINR). As a method of determining the received signal quality, it is possible to use a result obtained by measuring the received signal quality for each voiced segment as information of the received signal quality. By determining the maximum number of retransmission times also in consideration of the received signal quality, it is possible to actualize equalization of the received signal quality effectively, while at the same time improving throughput.

### [Other Embodiments]

The invention is specifically described using the above-mentioned Embodiment, but it is obvious to a person skilled in the art that the invention is not limited to the Embodiment described in the Specification. The invention is capable of being carried into practice as modified and changed aspects without departing from the subject matter and scope of the invention defined by the description of the scope of claims. Accordingly, the description in the Specification is intended to be an illustrative explanation and does not have any restrictive meaning on the invention.

## Claims

1. A radio base station (10) comprising:
a radio packet type determining section (101) configured to determine at least whether a radio packet is a first transmission packet that is allocated persistently at predetermined time intervals or a retransmission packet among radio packets transmitted to a radio communication terminal (20a, 20b);
a first transmission interval control section (102) configured to control a transmission interval of each first transmission packet so that the first transmission packet and a retransmission packet of a radio packet index different from that of the first transmission packet are dispersed in transmission allocation of first transmission packets allocated persistently at the predetermined time intervals;
a retransmission interval control section (103) configured to control a transmission interval of each retransmission packet in transmission allocation of the retransmission packet; and
a radio resource allocation section (104) configured to perform allocation of radio resources based on the transmission interval of each first transmission packet determined in the first transmission interval control section (102) and the transmission interval of each retransmission packet determined in the retransmission interval control section (103), **characterized in that**
the radio base station (10) is configured to allocate a plurality of consecutive sub-frames in the time domain to a radio communication terminal (20a, 20b) to which Sub-Frame Bundling is applied and the first transmission interval control section (102) is configured to set the transmission allocation interval of first transmission packets to be different between a radio communication terminal (20a, 20b) to which Sub-Frame Bundling is applied and a radio communication terminal (20a, 20b) to which Sub-Frame Bundling is not applied.

2. The radio base station (10) according to claim 1, wherein the first transmission interval control section (102) controls the transmission interval of each first transmission packet using at least one of received signal quality of the radio communication terminal (20a, 20b), and a data rate and the radio packet index of the radio packet to transmit.

3. The radio base station (10) according to claim 2, wherein the received signal quality includes information on whether or not a radio communication terminal (20A, 20B) is a radio communication terminal (20A, 20B) to which sub-frame bundung is applied , and
the data rate of the radio packet includes information on a data rate required per certain period in real-time traffic.

4. The radio base station (10) according to claim 1, further comprising:
a control signal generation transmission section (105) configured to generate a control signal using information output from the radio resource allocation section (104), and notifies the radio communication terminal (20a, 20b) of the control signal.

5. The radio base station (10) according to claim 1, wherein the radio resource allocation section (104) preferentially allocates the first transmission packet when transmission timing conflicts between the first transmission packet and the retransmission packet of the radio packet index different from that of the first transmission packet.

6. The radio base station (10) according to claim 1, further comprising:
a maximum number-of-transmission setting section (106) configured to control the maximum number of transmission times of the retransmission packet so that transmission timing does not conflict between the first transmission packet and the retransmission packet of the radio packet index different from that of the first transmission packet.

7. The radio base station (10) according to claim 6, wherein the radio resource allocation section (104) determines transmission intervals of the first transmission packet and the retransmission packet so as to maximize the number of transmission times of the retransmission packet.

8. The radio base station (10) according to claim6, further comprising:
an MCS determining section (107) configured to control a modulation scheme and a coding rate of each retransmission packet so as to equalize the received signal quality between retransmission packets , based on the maximum number of transmission times of each retransmission packet determined in the maximum number-of-transmission setting section.

9. The radio base station (10) according to any one of claims 1 to 8, wherein the first transmission interval control section (102) is configured to set the transmission allocation intervals of first transmission packets to be alternately different on the radio communication terminal (20a, 20b) to which Sub-Frame Bundling is applied.

10. A radio resource allocation method comprising the steps of:
determining at least whether a radio packet is a first transmission packet that is allocated persistently at predetermined time intervals or a retransmission packet among radio packets transmitted to a radio communication terminal;
controlling a transmission interval of each first transmission packet and a transmission interval of each retransmission packet so that the first transmission packet and a retransmission packet of a radio packet index different from that of the first transmission packet are dispersed in transmission allocation of first transmission packets allocated persistently at predetermined time intervals and of the retransmission packet; and
performing allocation of radio resources based on the transmission interval of each first transmission packet and the transmission interval of each retransmission packet; **characterized by**
allocating a plurality of consecutive sub-frames in the time domain to a radio communication terminal (20a, 20b) to which Sub-Frame Bundling is applied and setting the transmission allocation interval of first transmission packets to be different between a radio communication terminal (20a, 20b) to which Sub-Frame Bundling is applied and a radio communication terminal to which Sub-Frame Bundling is not applied.

11. The radio resource allocation method according to claim 10, wherein the transmission interval of each first transmission packet is controlled using at least one of received signal quality of the radio communication terminal, and a data rate and the radio packet index of the radio packet to transmit.

## Patentansprüche

1. Eine Funkbasisstation (10) aufweisend:
eine Funkpakettyps-Ermittlungssektion (101), die dazu eingerichtet ist, zumindest zu bestimmen ob ein Funkpaket ein Erstübertragungs-Paket ist, das durchgängig in vorgegebenen Zeitintervallen zugewiesen wird, oder ein Wiederholungsübertragungs-Paket aus Funkpaketen übertragen an ein Funkkommunikations-Endgerät (20a, 20b);
eine Erstübertragungsintervall-Steuersektion (102), eingerichtet zum Steuern eines Übertragungsintervalls eines jeden Erstübertragungs-Pakets, so dass das Erstübertragungs-Paket und ein Wiederholungsübertragungs-Paket eines Funkpaket-Index unterschiedlich von dem des Erstübertragungs-Pakets gestreut werden in die Übertragungs-Zuweisung von Erstübertragungs-Paketen, die durchgängig den vorgegebenen Zeitintervallen zugewiesen sind;
eine Wiederholungsübertragungs-Intervall-Steuersektion (103), eingerichtet zum Steuern eines Übertragungsintervalls jedes Wiederholungsübertragungs-Pakets in der Übertragungszuweisung des Wiederholungsübertragungs-Pakets; und
eine Funkressourcen-Zuweisungs-Sektion (104), dazu eingerichtet, eine Zuweisung von Funkressourcen basierend auf dem Übertragungsintervall eines jeden Erstübertragungs-Pakets ermittelt in der Erstübertragungsintervall-Steuersektion (102) und dem Übertragungsintervall eines jeden Wiederholungsübertragungs-Pakets ermittelt in der Wiederholungsübertragungs-Intervall-Steuersektion (103) zuzuweisen, **dadurch gekennzeichnet, dass**
die Funkbasisstation (10) dazu eingerichtet ist, eine Vielzahl von aufeinander folgenden Unter-Rahmen im Zeitbereich an ein Funkkommunikations-Endgerät (20a, 20b) zuzuweisen, auf das Unter-Rahmen-Bündelung angewendet wird, und die Erstübertragungsintervall-Steuersektion (102) dazu eingerichtet ist, das Übertragungs-Zuweisungs-Intervall von Erstübertragungs-Paketen festzulegen, so dass es unterschiedlich ist zwischen einem Funkkommunikations-Endgerät (20a, 20b), auf das Unter-Rahmen-Bündelung angewendet wird, und ein Funkkommunikations-Endgerät (20a, 20b), auf das Unter-Rahmen-Bündelung nicht angewendet wird.

2. Die Funkbasisstation (10) nach Anspruch 1, wobei die Erstübertragungsintervall-Steuersektion (102) das Übertragungsintervall eines jeden Erstübertragungs-Pakets kontrolliert unter Verwendung von zumindest einem aus der Empfangssignal-Qualität des Funkkommunikations-Endgeräts (20a, 20b), und einer Datenrate und dem Funkpaket-Index des zu übertragenden Funkpakets.

3. Die Funkbasisstation (10) nach Anspruch 2, wobei die Empfangssignal-Qualität Informationen enthält darüber, ob oder ob nicht ein Funkkommunikations-Endgerät (20a, 20b) ein Funkkommunikations-Endgerät (20a, 20b) ist, auf das Unter-Rahmen-Bündelung angewendet wird, und
die Datenrate des Funkpakets Informationen enthält über eine im Echtzeit-Verkehr benötigte Datenrate pro bestimmter Dauer.

4. Die Funkbasisstation (10) nach Anspruch 1, weiter aufweisend:
eine Steuersignal-Erzeugungs-Übertragungs-Sektion (105), dazu eingerichtet, ein Steuersignal unter Verwendung von Informationen ausgegeben von der Funkressourcen-Zuweisungs-Sektion (104) zu generieren, und das Funkkommunikations-Endgerät (20a, 20b) über das Steuersignal in Kenntnis setzt.

5. Die Funkbasisstation (10) nach Anspruch 1, wobei die Funkressourcen-Zuweisungs-Sektion (104) vorzugsweise das Erstübertragungs-Paket zuweist, wenn das Übertragungstiming zwischen dem Erstübertragungs-Paket und dem Wiederholungsübertragungs-Paket des Funkpaket-Index unterschiedlich zu dem des Erstübertragungs-Pakets kollidiert.

6. Die Funkbasisstation (10) nach Anspruch 1, weiter aufweisend:
eine Höchst-Übertragungsanzahl-Festlegungs-Sektion (106), dazu eingerichtet, die maximale Anzahl von Übertragungszeiten des Wiederholungsübertragungs-Pakets zu steuern, so dass das Übertragungstiming zwischen dem Erstübertragungs-Paket und dem Wiederholungsübertragungs-Paket des Funkpaket-Index unterschiedlich von dem des Erstübertragungs-Pakets nicht kollidiert.

7. Die Funkbasisstation (10) nach Anspruch 6, wobei die Funkressourcen-Zuweisungs-Sektion (104) Übertragungsintervalle des Erstübertragungs-Pakets und des Wiederholungsübertragungs-Pakets ermittelt, um die Anzahl der Übertragungszeiten des Wiederholungsübertragungs-Pakets zu maximieren.

8. Die Funkbasisstation (10) nach Anspruch 6, weiter aufweisend:
eine MCS-Ermittlungs-Sektion (107), dazu eingerichtet, ein Modulationsschema und eine Coderate jedes Wiederholungsübertragungs-Pakets zu steuern, so dass die Empfangssignal-Qualität zwischen Wiederholungsübertragungs-Paketen angeglichen wird, basierend auf der maximalen Anzahl der Übertragungszeiten eines jeden Wiederholungsübertragungs-Pakets ermittelt in der Höchst-Übertragungsanzahl-Festlegungs-Sektion.

9. Die Funkbasisstation (10) nach einem der Ansprüche 1 bis 8, wobei die Erstübertragungsintervall-Steuersektion (102) dazu eingerichtet ist, die Übertragungs-Zuweisungs-Intervalle von Erstübertragungs-Paketen alternativ unterschiedlich für die Funkkommunikations-Endgeräte (20a, 20b), auf die Unter-Rahmen-Bündelung angewendet wird, festzulegen.

10. Ein Funkressourcen-Zuweisungs-Verfahren, aufweisend die Schritte:
zumindest Ermitteln, ob ein Funkpaket ein Erstübertragungs-Paket ist, das durchgängig in vorgegebenen Zeitintervallen zugewiesen wird, oder ein Wiederholungsübertragungs-Paket aus Funkpaketen übertragen an ein Funkkommunikations-Endgerät;
Steuern eines Übertragungsintervalls eines jeden Erstübertragungs-Pakets und eines Übertragungsintervalls eines jeden Wiederholungsübertragungs-Pakets, so dass das Erstübertragungs-Paket und ein Wiederholungsübertragungs-Paket eines Funkpaket-Index unterschiedlich zu dem des Erstübertragungs-Pakets gestreut werden in die Übertragungs-Zuweisung von Erstübertragungs-Paketen durchgängig zugewiesen zu vorherbestimmten Zeitintervallen und von dem Wiederholungsübertragungs-Paket; und
Ausführung der Zuweisung von Funkressourcen basierend auf dem Übertragungsintervall eines jeden Erstübertragungs-Pakets und dem Übertragungsintervall eines jeden Wiederholungsübertragungs-Pakets; **gekennzeichnet durch**
Zuweisen einer Vielzahl aufeinander folgender Unter-Rahmen im Zeitbereich an ein Funkkommunikations-Endgerät (20a, 20b), auf das Unter-Rahmen-Bündelung angewendet wird, und Festlegen des Übertragungs-Zuweisungs-Intervalls von Erstübertragungs-Paketen, so dass sich diese unterscheiden zwischen einem Funkkommunikations-Endgerät (20a, 20b), auf das Unter-Rahmen-Bündelung angewendet wird, und ein Funkkommunikations-Endgerät, auf das Unter-Rahmen-Bündelung nicht angewendet wird.

11. Das Funkressourcen-Zuweisungs-Verfahren nach Anspruch 10, wobei das Übertragungsintervall eines jeden Erstübertragungs-Pakets gesteuert wird unter Verwendung zumindest eines aus Empfangssignal-Qualität des Funkkommunikations-Endgeräts, und einer Datenrate und dem Funkpaket-Index des zu übertragenden Funkpakets.

## Revendications

1. Station de base radio (10) comprenant :
une section de détermination d'un type de paquet radio (101) configurée pour déterminer au moins si le paquet radio est un premier paquet de transmission continuellement attribué à des intervalles de temps prédéterminés ou un paquet de retransmission parmi des paquets radio transmis à un terminal de communication radio (20a, 20b) ;
une première section de contrôle d'un intervalle de transmission (102) configurée pour contrôler un intervalle de transmission de chaque premier paquet de transmission de sorte que le premier paquet de transmission et un paquet de retransmission d'un index de paquet radio différent de celui du premier paquet de transmission sont dispersés lors de l'attribution de transmission de premiers paquets de transmission continuellement attribués aux intervalles de temps prédéterminés ;
une section de contrôle de l'intervalle de retransmission (103) configurée pour contrôler un intervalle de transmission de chaque paquet de retransmission lors de l'attribution de transmission du paquet de retransmission ;
et
un section d'attribution de ressource radio (104) configurée pour procéder à l'attribution de ressources radio en se fondant sur l'intervalle de transmission de chaque premier paquet de transmission déterminé dans la première section de contrôle de l'intervalle de transmission (102) et l'intervalle de transmission de chaque paquet de retransmission déterminé dans la section de contrôle de l'intervalle de retransmission (103),
**caractérisée en ce que**
la station de base radio (10) est configurée pour attribuer une pluralité de sous-trames consécutives dans le domaine temporel à un terminal de communication radio (20a, 20b) auquel est appliqué un groupage de sous-trame et que la première section de contrôle d'un intervalle de transmission (102) est configurée pour fixer l'intervalle d'attribution de transmission des premiers paquets de transmission de telle manière qu'il soit différent selon qu'il s'agisse d'un terminal de communication radio (20a, 20b) auquel un groupage de sous-trame est appliqué ou d'un terminal de communication radio (20a, 20b) auquel un groupage de sous-trame n'est pas appliqué.

2. Station de base radio (10) selon la revendication 1, où la première section de contrôle d'un intervalle de transmission (102) contrôle l'intervalle de transmission de chaque premier paquet de transmission en utilisant au moins l'un des éléments du groupe constitué de la qualité du signal reçu du terminal de communication radio (20a, 20b) et un débit de données et l'index de paquet radio du paquet radio à transmettre.

3. Station de base radio (10) selon la revendication 2, où la qualité de signal reçue comprends de l'information indiquant si un terminal de communication radio (20a, 20b) est un terminal de communication radio (20a, 20b) auquel un groupage de sous-trame a été appliqué, et
où le débit de données du paquet radio comprends de l'information sur un débit de données requis par période déterminée dans le trafic en temps réel.

4. Station de base radio (10) selon la revendication 1, comprenant en outre :
une section de transmission et de production d'un signal de contrôle configurée pour produire un signal de contrôle en utilisant l'information envoyée par la section d'attribution de ressource radio (104) et qui notifie le terminal de communication radio (20a, 20b) du signal de contrôle.

5. Station de base radio (10) selon la revendication 1, où la section d'attribution de ressource radio (104) attribue le premier paquet de transmission de préférence lorsqu'il y a conflit entre la synchronisation de transmission du premier paquet de transmission et celle du paquet de retransmission ayant un index de paquet radio différent de celui du premier paquet de transmission.

6. Station de base radio (10) selon la revendication 1, comprenant en outre :
une section de définition d'un nombre maximum de transmissions (106) configurée pour contrôler le nombre maximal de temps de transmission du paquet de retransmission de sorte qu'il n'y ait pas de conflit entre la synchronisation de transmission du premier paquet de transmission et celle du paquet de retransmission ayant un index de paquet radio différent de celui du premier paquet de transmission.

7. Station de base radio (10) selon la revendication 6, où la section d'attribution de ressource radio (104) détermine les intervalles de transmission du premier paquet de transmission et du paquet de retransmission de manière à maximiser le nombre de temps de transmission du paquet de retransmission.

8. Station de base radio (10) selon la revendication 6, comprenant en outre :
une section de détermination d'un schéma de modulation et de codage (MCS) (107) configuré pour contrôler un schéma de modulation et un taux de codage de chaque paquet de retransmission afin d'égaliser la qualité de signal reçue des paquets de retransmission en se fondant sur le nombre maximal de temps de transmission de chaque paquet de retransmission déterminé dans la section de définition d'un nombre maximum de transmissions.

9. Station de base radio (10) selon l'une des revendications 1 à 8, où la première section de contrôle d'un intervalle de transmission (102) est configurée pour définir les intervalles d'attribution de transmission des premiers paquets de transmission de manière à ce qu'ils soient alternativement différents dans le terminal de communication radio (20a, 20b) auquel est appliqué le groupage de sous-trame.

10. Méthode d'attribution de ressource radio comprenant les étapes suivantes :
déterminer au moins si le paquet radio est un premier paquet de transmission qui est attribué de manière continue à des intervalles de temps prédéterminés ou un paquet de retransmission parmi des paquets radio transmis à un terminal de communication radio ;
contrôler un intervalle de transmission de chaque premier paquet de transmission et d'un intervalle de transmission de chaque paquet de retransmission de sorte que le premier paquet de transmission et un paquet de retransmission ayant un index de paquet radio différent de celui du premier paquet de transmission soient dispersés lors de l'attribution de transmission des premiers paquets de transmission continuellement attribués aux intervalles de temps prédéterminés et du paquet de retransmission ; et
mettre en oeuvre l'attribution de ressources radio sur la base de l'intervalle de transmission de chaque premier paquet de transmission et de l'intervalle de transmission de chaque paquet de retransmission ;
**caractérisée par**
l'attribution d'une pluralité de sous-trames consécutives dans le domaine temporel à un terminal de communication radio (20a, 20b) auquel est appliqué un groupage de sous-trames et la définition de l'intervalle d'attribution de transmission des premiers paquets de transmission de telle manière qu'il soit différent selon qu'il s'agisse d'un terminal de communication radio (20a, 20b) auquel un groupage de sous-trame est appliqué ou d'un terminal de communication radio (20a, 20b) auquel un groupage de sous-trame n'est pas appliqué.

11. Méthode d'attribution de ressources radio selon la revendication 10, où l'intervalle de transmission de chaque premier paquet de transmission est contrôlé en utilisant au moins l'un des éléments du groupe constitué de la qualité du signal reçu du terminal de communication radio et un débit de données et l'index de paquet radio du paquet radio à transmettre.
